# EUROPÄISCHE PATENTSCHRIFT

(11) **EP 1 519 466 B1**
(45) Veröffentlichungstag und Bekanntmachung des Hinweises auf die Patenterteilung: **06.11.2013**
(21) Anmeldenummer: 04017263.7
(22) Anmeldetag: 22.07.2004
(51) Int. Cl.: H02J 7/00

(54) **System zur Energieversorgung eines elektrischen Verbrauchers eines Fahrzeugs**
System for power supply of an electric load of a vehicle
Système pour l'alimentation d'enérgie d'une charge électrique d'un véhicule.

(30) Priorität: 25.09.2003 DE 20314847 U
(43) Veröffentlichungstag der Anmeldung: 30.03.2005
(73) Patentinhaber: Hobby-Wohnwagenwerk Ing. Harald Striewski GmbH, 24787 Fockbek (DE)
(72) Erfinder: Striewski, Harald, 24813 Schülp (DE)
(74) Vertreter: Stenger, Watzke & Ring

(56) Entgegenhaltungen:
- DE-C1- 10 126 007
- GB-A- 2 174 558
- US-A- 5 487 278
- US-A- 5 635 817

## Beschreibung

Die vorliegende Erfindung betrifft ein System zur Energieversorgung eines elektrischen Verbrauchers eines Fahrzeugs, insbesondere eines Caravans, mit einem mit einer externen Energieversorgung verbindbaren Netzteil sowie mit einem mittels einer Reglereinheit ladbaren elektrischen Energiespeicher, wobei der Verbraucher aus dem elektrischen Energiespeicher oder über das Netzteil mit Energie versorgbar ist. Die Erfindung betrifft ferner ein Verfahren zum Betrieb des erfindungsgemäßen Systems.

Derartige Fahrzeuge, beispielsweise Wohnwagen, weisen elektrische Verbraucher auf, die mit einer Kleinspannung wie z. B. 12 V Gleichspannung betrieben werden. Solche Verbraucher können beispielsweise eine Wasserpumpe, Beleuchtungen, Elektronik für eine Heizung, ein Kühlschrank, Pumpe für Warmwasserheizung, Zündeinrichtungen für einen Kühlschrank oder ein Gebläse sein. Im stationären Betrieb, wenn beispielsweise eine externe Energieversorgung wie das öffentliche 230 V ― Netz verfügbar ist, weisen die Fahrzeuge ein mit der öffentlichen Energieversorgung verbindbares Netzteil auf, welches die Kleinspannung für die Verbraucher erzeugt. Ist eine derartige externe Energieversorgung nicht verfügbar, werden die Kleinspannungsverbraucher in der Regel über ein Umschaltrelais von einem Akkumulator des Zugfahrzeugs versorgt.

Ein Netzteil für die Wandlung der Spannung aus einer öffentlichen Energieversorgung in eine Kleinspannung wie 12 V kann beispielsweise mit einem Netztransformator ausgerüstet sein, der primärseitig mit der öffentlichen Energieversorgung verbunden ist und sekundärseitig mit einem Gleichrichter, insbesondere einem Brückengleichrichter, an dessen Ausgangsklemmen eine Gleichspannung verfügbar ist. Eine solche Gleichspannung ist in der Regel nicht stabilisiert und pulsiert mit der Frequenz der öffentlichen Energieversorgung. Daher ist es erforderlich, für die Verbraucher, die zum Betrieb mit dieser Gleichspannung nicht geeignet sind, eine stabilisierte, geglättete Gleichspannung bereitzustellen, wozu entsprechende Phonosiebe zum Einsatz kommen, mit denen die gewünschte Qualität der Gleichspannung erreichbar ist. Da Phonosiebe kostenintensiv sind, werden sie in der Regel nur für die unbedingt erforderliche Leistung der stabilisierten Gleichspannung ausgelegt. Daher sind in einem solchen Fall im Fahrzeug zwei unterschiedliche 12 V ― Spannungen vorhanden, für die getrennte Verkabelungen vorgesehen sind.

Daneben kommen Netzteile, welche als Schaltnetzteile ausgeführt sind, zum Einsatz, die bereits direkt eine geglättete und stabilisierte Gleichspannung bereitstellen. Schaltnetzteile sind jedoch im Vergleich zu den zuvor genannten Netzteilen deutlich kostenintensiver, so daß deren Verbreitung bisher nur in begrenztem Umfang erfolgt ist.

Um das Fahrzeug von einer externen Energieversorgung unabhängig zu machen, ist es bekannt, im Fahrzeug einen lokalen Energiespeicher vorzusehen, der parallel zum Verbraucher ungeregelt am Netzteil angeschlossen ist. Im Falle der Nichtverfügbarkeit des öffentlichen Energieversorgungsnetzes erfolgt die Versorgung der Verbraucher aus diesem Energiespeicher. Der Energiespeicher kann alternativ oder auch zusätzlich mittels weiterer geeigneter Einrichtungen von einem Solarpanel oder auch mittels eines Spannungsboosters aus einer Zugfahrzeugbatterie geladen werden.

Nachteilig ist, daß ein solches System einen hohen Montageaufwand sowie einen hohen schaltungstechnischen Aufwand erfordert und es daher insbesondere für eine Nachrüstung eines vorhandenen Systems ungeeignet ist. Darüber hinaus erweist es sich als nachteilig, daß ein Netzteil, welches zur gleichzeitigen Ladung des Energiespeichers und Versorgung aller Verbraucher ausgelegt ist, im Falle von abgeschalteten Verbrauchern den Energiespeicher mit einem hohen Ladestrom beaufschlagt. Dies beeinträchtigt die Lebensdauer und Zuverlässigkeit des Energiespeichers, und kann sogar zu dessen Überlastung führen.

Aus der DE 10126007 ist ein System zur Versorgung eines elektrischen Verbrauchers eines Fahrzeugs bekannt, welches System ein mit einer externen Energieversorgung verbundenes Lademodul zur Ladung eines lokalen Energiespeichers aufweist.

Es ist die **Aufgabe** der vorliegenden Erfindung, ein System zur Versorgung eines elektrischen Verbrauchers eines Fahrzeugs bereitzustellen, welches mit geringem Aufwand nachrüstbar ist und eine effektive, den Energiespeicher gering belastende Ladung ermöglicht.

Als **Lösung** wird mit der Erfindung ein gattungsgemäßes System vorgeschlagen, wobei die Reglereinheit zum Bezug von Energie zur Ladung des Energiespeichers mit dem Netzteil verbindbar ist.

Mit der vorgeschlagenen Lösung besteht erstmals die Möglichkeit, mit geringem Aufwand für Montage das Fahrzeug mit einer autarken Energieversorgung für seine Verbraucher auszurüsten. Das erfindungsgemäße System eignet sich besonders auch zur Nachrüstung von Fahrzeugen, die bislang über keine autarke Energieversorgung verfügen. Der Eingriff in eine vorhandene Verkabelung kann gering gehalten werden. Darüber hinaus kann ein Eingriff in die Verkabelung zur externen Energieversorgung ganz vermieden werden, bei der entsprechende strenge Sicherheitsvorschriften zu berücksichtigen wären. Die vorgesehene Reglereinheit braucht daher nur für Kleinspannung dimensioniert zu sein. Aufwand für Bauteile und die Prüfung der elektrischen Sicherheit können reduziert werden. Eine von einer externen wie der öffentlichen Energieversorgung unabhängige Versorgung der Verbraucher des Fahrzeugs kann erreicht werden. Mit der Reglereinheit kann zudem erreicht werden, daß der Energiespeicher bestimmungsgemäß geladen werden kann. Hohe Ladeströme können vermieden werden. Besonders vorteilhaft erweist es sich, daß auch Fahrzeuge nachrüstbar sind, die bislang über keine eigene autarke Energieversorgung verfügen. Die Versorgung der Reglereinheit aus dem Netzteil mit Energie führt zudem zu einer Erleichterung der Sicherheitsanforderungen auch während der Montage gegenüber einer Reglereinheit, die aus einem externen Energieversorgungsnetz betrieben würde. Vorteilhaft braucht die Reglereinheit nur für Niederspannung ausgelegt zu sein, wodurch sie kostengünstiger ist und geringere Anforderungen an die elektrische Sicherheit erforderlich sind.

In einer weiteren Ausgestaltung wird vorgeschlagen, daß die Reglereinheit zusätzlich von einer weiteren Energiequelle mit Energie versorgbar ist. Die weitere Energiequelle kann beispielsweise eine Zugfahrzeugbatterie sein, die ebenfalls mit der Reglereinheit verbunden ist. So kann eine hohe Verfügbarkeit der Energieversorgung über einen längeren Zeitraum erreicht werden, wenn keine externe Energieversorgung verfügbar ist. Darüber hinaus bietet diese Ausgestaltung den Vorteil der Redundanz, so daß die Auswirkungen eines beschädigten Energiespeichers, der beispielsweise nur noch über eine geringe Kapazität verfügt, bis zu dessen Reparatur überbrückt werden können. Eine höhere Zuverlässigkeit der Energieversorgung des Verbrauchers kann erreicht werden, da auf mehrere Energiequellen zurückgegriffen werden kann. Es kann vorgesehen sein, daß der gleichzeitige Betrieb mit mehreren Energiequellen ermöglicht wird. Die Verwendung mehrerer Energiequellen kann vom Verbrauch an Energie abhängig gemacht sein.

Ferner wird vorgeschlagen, daß die Reglereinheit programmierbar ist. So können beispielsweise in Abhängigkeit vom Typ des Energiespeichers Ladezeiten, Ladestrom und Ladespannung bedarfsgerecht eingestellt werden. Darüber hinaus kann vorgesehen sein, daß der Ladevorgang in Abhängigkeit vom Betrieb des Verbrauchers ausgeführt wird. Weiterhin bietet diese Ausgestaltung die Möglichkeit, eine Erhaltungsladung vorzusehen, die sicherstellt, daß der geladene Energiespeicher seinen geladenen Zustand beibehält. Das Programmieren kann über eine an der Reglereinheit vorgesehene Schnittstelle erfolgen, über die die Programmierung mittels einer Rechnereinheit vorgenommen wird. Es kann aber auch vorgesehen sein, daß die Reglereinheit eine Eingabeeinheit aufweist, über die die gewünschten Parameter programmierbar sind.

In einer weiteren Ausgestaltung wird vorgeschlagen, daß die Reglereinheit ein Schaltmittel aufweist. Das Schaltmittel kann beispielsweise als Relais, als Handschalter oder auch als elektronischer Schalter ausgeführt sein. Mit dem Schaltmittel kann erreicht werden, daß der Verbraucher vom Energiespeicher während des Ladevorgangs getrennt ist. Darüber hinaus kann vorgesehen sein, daß der Verbraucher bei einem entladenen Energiespeicher von diesem getrennt ist. Die Trennung kann auch automatisch beispielsweise von der Reglereinheit ausgeführt werden, bei Unterschreitung eines Schwellwerts für eine vorgebbare Spannung.

Weiterhin wird vorgeschlagen, daß die Reglereinheit einen Verpolungsschutz aufweist. Dies erleichtert die Montage und bringt während der Montage zusätzliche Sicherheit. Im Falle eines Falschanschlusses kann somit vermieden werden, daß bei Zuschaltung des Energiespeichers oder der Energieversorgung die Reglereinheit beschädigt wird. Der Verpolungsschutz kann beispielsweise durch elektronische Mittel in bekannter Weise ausgeführt sein.

Darüber hinaus wird vorgeschlagen, daß die Reglereinheit einen Überlastschutz aufweist. Der Überlastschutz kann beispielsweise in der Reglereinheit durch eine elektronische Schaltung ausgebildet sein, die die gewünschten Überlastparameter überwacht, beispielsweise Temperatur, Ausgangsstrom oder dergleichen. Die Zuverlässigkeit der Reglereinheit kann erhöht werden. So kann z. B. bei einem defekten Energiespeicher, welcher einen Kurzschluß zwischen seinen Klemmen herstellt, der Überlastschutz die Reglereinheit abschalten, um deren Beschädigung zu verhindern und weitere Schäden aufgrund eines Kurzschlußstromes am Energiespeicher zu vermeiden. Auch kann vorgesehen sein, daß bei Überschreiten einer vorgebbaren Umgebungstemperatur die Reglereinheit in ihrer Leistung begrenzt oder sogar abgeschaltet wird, um deren Beschädigung durch Übertemperatur zu vermeiden.

In einer Weiterbildung der vorliegenden Erfindung wird vorgeschlagen, daß die Energiequelle eine Gleichspannungsquelle ist. Aufwand für Gleichrichtung und ggfs. für Glättung kann vermieden werden. Darüber hinaus bietet eine Gleichspannungsquelle eine leichte Verfügbarkeit und ist als unabhängige, mobile Energiequelle kostengünstig.

Weiterhin wird vorgeschlagen, daß die Gleichspannungsquelle ein Akkumulator eines Zugfahrzeugs ist. Hierdurch kann die Nutzung einer ohnehin vorhandenen Kapazität erreicht werden, wobei zugleich sichergestellt ist, daß der Akkumulator während der Fahrt bzw. des Betriebs des Motors wieder geladen werden kann. Die Verfügbarkeit der Energieversorgung kann weiter erhöht werden.

Ferner wird vorgeschlagen, daß die Gleichspannungsquelle eine Solarzelle ist. Mit der Solarzelle kann eine kostenlose Stromerzeugung auf umweltfreundliche Art und Weise erreicht werden. Die Solarzelle kann dazu an geeigneter Stelle des Fahrzeugs angebracht sein, um möglichst effizient Strom aus Sonnenlicht erzeugen zu können.

Daneben wird vorgeschlagen, daß die Gleichspannungsquelle eine Brennstoffzelle ist. Die Brennstoffzelle kann beispielsweise mit Campinggas oder auch mit Erdgas betreibbar sein, die in der Regel kostengünstig und leicht verfügbar sind.

Es wird weiterhin vorgeschlagen, daß der Energiespeicher ein Akkumulator ist. Insbesondere ist der Akkumulator als Blei-Säure-Akkumulator ausgeführt, er kann aber auch als elektrischer Kondensator ausgebildet sein. Ein Blei-Säure-Akkumulator kann eine hohe Kapazität aufweisen und darüber hinaus kostengünstig sein.

In einer weiteren Ausgestaltung wird vorgeschlagen, daß das Netzteil ein Schaltnetzteil ist. Gegenüber konventionellen Transformatornetzteilen zeichnet sich ein Schaltnetzteil dadurch aus, daß es deutlich leichter und kleiner sein kann, wobei zugleich eine Stabilisierung der Ausgangsspannung bei hoher Effizienz erreicht werden kann. Ferner kann mit einem Schaltnetzteil ein hoher Regelbereich bei Eingangsspannungsschwankungen erreicht werden, so daß eine sehr zuverlässige Energieversorgung erreicht werden kann.

Darüber hinaus wird vorgeschlagen, daß das Schaltnetzteil ein Schaltmittel aufweist. Das Schaltmittel kann beispielsweise als Relais oder auch als elektronischer Schalter, wie beispielsweise Transistor oder Thyristor, ausgebildet sein. Mit dem Schaltmittel kann erreicht werden, daß der Verbraucher bei Verfügbarkeit einer externen Energieversorgung aus dieser mit Energie versorgt wird und daß zugleich der Energiespeicher geladen wird. Es kann vorgesehen sein, daß die Umschaltung automatisch erfolgt, sobald das externe Energieversorgungsnetz verfügbar ist. Ebenso kann eine automatische Ladung des Energiespeichers erreicht werden.

In einer weiteren Ausgestaltung wird vorgeschlagen, daß das System eine Anzeigeeinheit aufweist. Mit der Anzeigeeinheit kann beispielsweise der Ladestrom, die Ladespannung, Akkubetrieb, Netzbetrieb oder dergleichen angezeigt werden. Die Anzeigeeinheit kann als Drehzeigermeßinstrument, Bildschirm, Siebensegmentanzeige oder in Form von Leuchtdioden-Ketten ausgebildet sein. Mit der Anzeigeeinheit kann ferner erreicht werden, daß Störungszustände oder auch die Verfügbarkeit der externen Energieversorgung angezeigt werden.

In einer vorteilhaften Weiterbildung der vorliegenden Erfindung wird vorgeschlagen, daß das System eine Eingabeeinheit aufweist. Die Eingabeeinheit kann als Touch-Panel, Tastatur oder dergleichen ausgebildet sein. Mit der Eingabeeinheit kann beispielsweise ein Schwellwert eingestellt werden oder es kann eingestellt werden, welche Werte auf der Anzeigeeinheit angezeigt werden. Darüber hinaus kann das Vornehmen einer Programmierung vorgesehen sein.

Weiterhin wird vorgeschlagen, daß die Energieversorgung der Reglereinheit automatisch wählbar ist. So kann beispielsweise die Reglereinheit automatisch die kostengünstigste Energiequelle wählen, z. B. eine angeschlossene Solarzelle.

In einer weiteren Ausgestaltung wird vorgeschlagen, daß die Reglereinheit eine Aufwärtsregelung aufweist. So kann z. B. vorgesehen sein, daß bei einer zu niedrigen Eingangsspannung für die Ladung des Energiespeichers die Spannung hochgesetzt wird, so daß eine bestimmungsgemäße Ladung des Energiespeichers ausgeführt werden kann. Es kann vorgesehen sein, daß die Reglereinheit diese Funktion automatisch ausführt.

Darüber hinaus wird vorgeschlagen, daß die Reglereinheit eine Abwärtsregelung aufweist. So kann bei einer zu hohen Eingangsspannung ein Absenken der Spannung auf einen für die bestimmungsgemäße Ladung des Energiespeichers geeigneten Wert erreicht werden. Auch diese Funktion kann automatisch von der Reglereinheit ausgeführt werden. Die Reglereinheit kann ferner sowohl für eine Aufwärtsregelung als auch für eine Abwärtsregelung geeignet sein, wobei eine automatische Funktion vorgesehen sein kann.

Um Anforderungen an die Energiequelle hinsichtlich der Strombelastbarkeit zu reduzieren, wird vorgeschlagen, daß ein Eingangsstrom der Reglereinheit begrenzbar ist. Die Grenze kann einstellbar sein. Kostenreduzierung und eine hohe Betriebssicherheit kann erreicht werden. Ferner kann erreicht werden, daß die Energiequelle nicht durch eine kurze Überlast ausfällt, wodurch die Energieversorgung gestört werden würde.

In einer vorteilhaften Weiterbildung wird vorgeschlagen, daß ein Ausgangsstrom und/oder eine Ausgangsspannung der Reglereinheit regelbar ist. Es kann erreicht werden, daß der Energiespeicher bedarfsgerecht geladen werden kann. So kann beispielsweise vorgesehen sein, daß bei einem 12 V - Akkumulator eine Ladespannung von 14,2 V für eine Betriebszeit von 6 Stunden eingestellt wird. Danach kann vorgesehen sein, daß die Ladespannung auf 13,8 V eingestellt wird, um eine Erhaltungsladung zu erreichen. Es kann aber auch vorgesehen sein, daß für eine vorgegebene Zeitdauer ein konstanter Ladestrom eingestellt wird.

Um den Zustand des Energiespeichers überwachen zu können, wird vorgeschlagen, daß mittels einer Anzeigeeinheit die Betriebszustandsgröße des Energiespeichers anzeigbar ist. So können beispielsweise der Ladezustand, der Strom, die Spannung und/oder die Temperatur des Energiespeichers angezeigt werden. Aus den angezeigten Daten kann auf die Verfügbarkeit der Energieversorgung durch den Energiespeicher geschlossen werden.

In einer vorteilhaften Weiterbildung wird vorgeschlagen, daß die Reglereinheit eine vorgebbare Kennlinie zur Ladung des Energiespeichers aufweist. Eine optimale Ladung des Energiespeichers kann erreicht werden, wodurch ein hoher Ladezustand erreichbar ist. Ferner kann eine Erhaltungsladung erreicht werden, so daß die maximale Verfügbarkeit erreicht werden kann.

In einer weiteren Ausgestaltung wird vorgeschlagen, daß bei aktiver Energieversorgung über das Netzteil der Verbraucher vom Energiespeicher elektrisch abschaltbar und direkt vom Netzteil mit Energie versorgbar ist. So kann beispielsweise über das Schaltmittel des Netzteils die entsprechende Trennung bewirkt werden. Das Schaltmittel ist hierzu beispielsweise als Umschaltrelais ausgeführt. Es kann aber auch als elektronisches Umschaltmittel ausgebildet sein.

Vorteilhaft kann erreicht werden, daß der Energiespeicher nur im Bedarfsfall belastet wird. Hierzu kann eine Vorrangschaltung vorgesehen sein, die im Netzteil integriert sein kann.

Darüber hinaus wird vorgeschlagen, daß der Energiespeicher bei Unterschreiten eines Schwellwertes der von ihm gespeicherten Energie vom Verbraucher elektrisch trennbar ist. Ein Schutz des Energiespeichers kann erreicht werden. Der Schwellwert kann einstellbar sein und beispielsweise die Spannung des Energiespeichers sein.

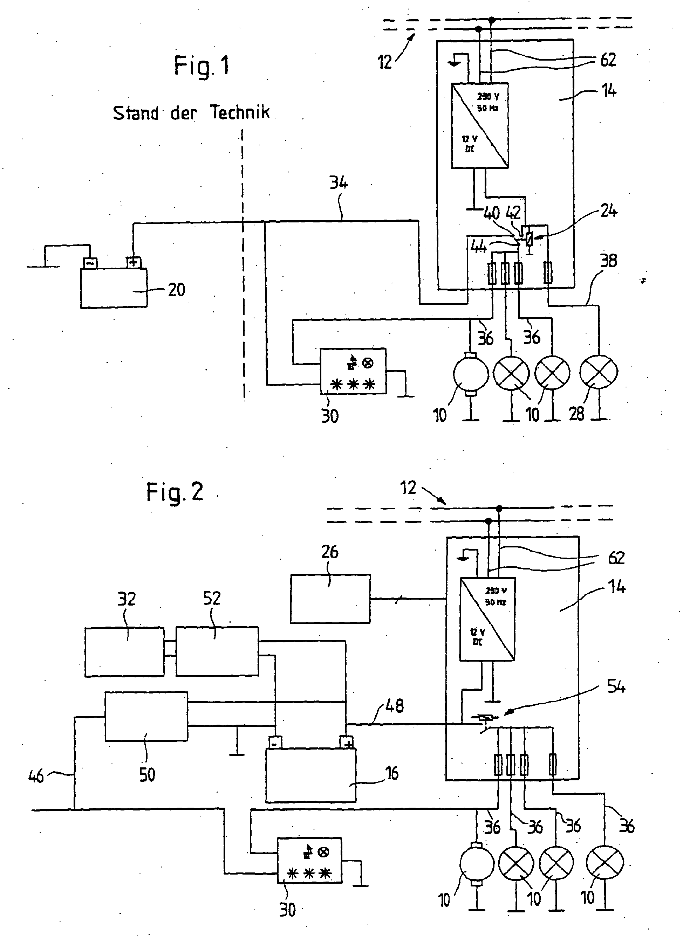

Weitere Vorteile und Merkmale sind der folgenden Beschreibung von Ausführungsbeispielen zu entnehmen. Im wesentlichen gleichbleibende Bauteile sind mit den gleichen Bezugszeichen bezeichnet. Ferner wird bezüglich gleicher Merkmale und Funktionen auf die Beschreibung zum Ausführungsbeispiel in Fig. 2 verwiesen. Die Zeichnungen sind Schemazeichnungen und dienen nur der Erläuterung der folgenden Ausführungsbeispiele.

Es zeigen:
- Fig. 1: ein Schaltbild für eine Energieversorgung von Verbrauchern eines Wohnwagens ohne eigene Energiequelle,
- Fig. 2: einen Schaltplan für eine Energieversorgung von Verbrauchern eines Wohnwagens mit einer eigenen Energieversorgung des Stands der Technik und
- Fig. 3: einen Schaltplan für eine erfindungsgemäße Energieversorgung von Verbrauchern eines Wohnwagens.

Fig. 1 zeigt ein Schaltbild für eine elektrische Energieversorgung von Verbrauchern 10, 28 eines nicht näher bezeichneten Caravans, welche über Leitungen 36, 38 mit einem Netzteil 14 verbunden sind. Das Netzteil 14 ist über Leitungen 62 mit einer öffentlichen Energieversorgung 12, dem 230 V-Netz, verbunden. Ausgangsseitig liefert das als Schaltnetzteil 14 ausgeführte Netzteil eine 12 V - Gleichspannung. Das Netzteil 14 weist ferner ein Umschaltrelais 24 auf, dessen Umschaltkontakt 44 mit den Verbrauchern 10, 30 verbunden ist. Der Kontakt 42 ist mit der 12 V - Gleichspannung des Schaltnetzteils verbunden. Ferner ist dieser Kontakt über eine Leitung 38 mit der Vorzeltleuchte 28 verbunden. Kontakt 40 des Relais 24 ist über eine Leitung 34 mit der Zugfahrzeugsbatterie 20 elektrisch leitend verbunden. Ferner besteht zwischen nicht näher dargestelltem Zugfahrzeug und dem Caravan eine nicht näher bezeichnete gemeinsame Masseverbindung, auf der die Gegenpole der Energiespeicher und -versorgungseinrichtungen sowie der Verbraucher zusammengeführt sind. In dieser Ausführung ist eine Energieversorgung der Verbraucher 10, 30 nur dann gewährleistet, wenn entweder das Netzteil 14 über die öffentliche Energieversorgung 12 mit Energie versorgt wird oder eine Energieversorgung aus der Zugfahrzeugbatterie 20 über die Leitung 34 sichergestellt ist. lst beispielsweise eine öffentliche Energieversorgung 12 nicht verfügbar und besteht Bedarf mit dem Zugfahrzeug eine Besorgung zu erledigen, so ist der Caravan stromlos. Dies ist insbesondere für den Kühlschrank 30 von Nachteil, da dort gelagerte Lebensmittel sich ggf. in unzulässiger Weise erwärmen. Das betrifft auch den Gasbetrieb des Kühlschranks, wenn dieser eine elektrisch betreibbare Zündvorrichtung aufweist. Die Vorzeltleuchte 28 ist nur vom Netzteil versorgbar.

Einen Vorschlag für eine autarke Energieversorgung bietet der Stand der Technik gemäß Fig. 2, bei dem ein Netzteil 14 als Schaltnetzteil ausgeführt ist und über Leitungen 62 mit einer öffentlichen Energieversorgung 12 verbindbar ist. Niederspannungsseitig werden 12 V Gleichspannung bereitgestellt, die über ein Einschaltrelais 54 die Verbraucher 10, 30, 38 mit elektrischer Energie versorgt. Ferner ist im Caravan ein Akkumulator 16 vorgesehen, der über eine Leitung 48 direkt mit dem Netzteil 14 verbunden ist. Parallel zum Netzteil 14 ist über einen Solarregler 52 ein Solarpanel 32 am Akkumulator 16 angeschlossen. Weiterhin ist ein Spannungsbooster 50 parallel am Akkumulator 16 angeschlossen, der über eine Leitung 46 aus einer nicht näher dargestellten Zugfahrzeugsbatterie 20 gespeist wird. Diese Ausgestaltung weist jedoch den Nachteil auf, daß der Akkumulator 16 ungeregelt mit einem Ladestrom beaufschlagt wird, sobald das Netzteil 14 aus der öffentlichen Energieversorgung 12 mit Energie versorgt wird. Insbesondere wenn die Verbraucher 10, 38, 30 über das Einschaltrelais 54 abgeschaltet sind, wird der Akkumulator 16 mit einem hohen Ladestrom beaufschlagt. Parallel hierzu wird der Akkumulator 16 ggf. vom Solarpanel 32 über den Regler 52 als auch über den Spannungsbooster 50 geladen. Diese Ausgestaltung erfordert zudem, daß eine Vielzahl von Komponenten angeordnet werden, die durch einen entsprechenden Verkabelungsaufwand miteinander zu verbinden sind. Dies erweist sich insbesondere im Falle einer Nachrüstung bei einem System gemäß Fig. 1 als nachteilig.

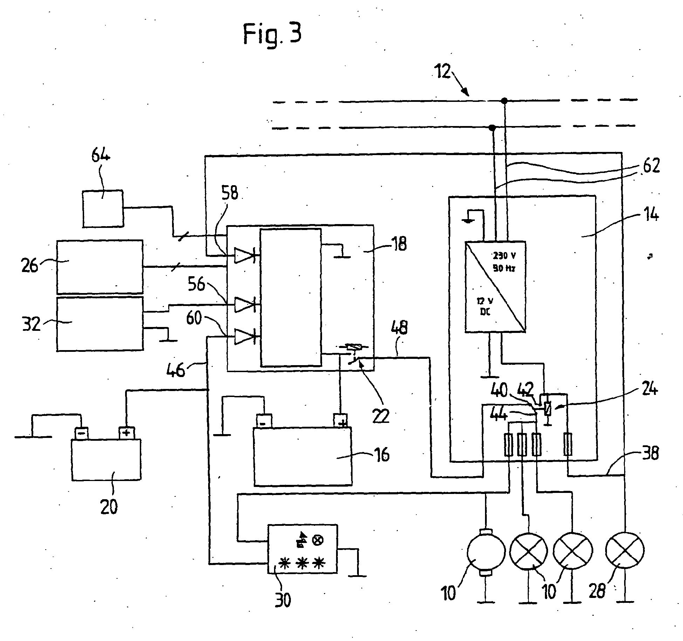

Mit Fig. 3 wird eine erfindungsgemäße Lösung vorgeschlagen, die ein Nachrüsten mit geringem Aufwand ermöglicht. Die erfindungsgemäße Lösung sieht vor, daß anstelle der Leitung 34 in Fig. 1 ein Regler mit zwei Leitungen 46, 48 in entsprechender Weise angeschlossen wird. Die Reglereinheit 18 ist ferner mit dem Akkumulator 16 verbunden. Zur Versorgung der Reglereinheit 18 mit elektrischer Energie ist ein Anschluß 58 der Reglereinheit 18 mit der Leitung 38 verbunden. Die Reglereinheit 18 weist einen weiteren Anschluß 56 zum Anschluß eines Solarpanels 32 auf. Ferner ist an der Reglereinheit 18 ein Anschluß 60 vorgesehen, der über die Leitung 46 mit der Zugfahrzeugbatterie 20 des nicht weiter dargestellten Zugfahrzeugs verbindbar ist. Die Reglereinheit 18 weist ferner einen elektrischen Schalter 22 auf, der über eine Leitung 48 auf den Kontakt 40 des Umschaltrelais 24 des Netzteils 14 geführt ist. Über diese Leitung werden die Verbraucher 10, 30 mit elektrischer Energie versorgt, sobald das Netzteil 14 nicht mehr über die öffentliche Energieversorgung 12 mit Energie versorgt wird. In diesem Fall ist auch sichergestellt, daß die Vorzeltleuchte 28 außer Betrieb ist. In diesem Zustand erfolgt die Energieversorgung aus dem Akkumulator 16 über den in diesem Zustand geschlossenen elektrischen Schalter 22.

Die Reglereinheit 18 ermöglicht zugleich eine Energieversorgung vom Solarpanel 32, um so den Ladezustand des Akkumulators 16 soweit wie möglich aufrecht zu erhalten. Die Reglereinheit 18 stellt hierfür eine geeignete Reglerfunktion zur Verfügung. Sollte nicht genügend Energie über das Solarpanel 32 bereitstellbar sein, so besteht die Möglichkeit, aus der nicht dargestellten Zugfahrzeugbatterie 20 dem Akkumulator 16 Energie zuzuführen. Hierzu weist die Reglereinheit 18 eine nicht näher dargestellt Einheit zur Aufwärts- und/oder Abwärtsregelung der Spannung auf. Somit kann auch bei unterschiedlichen Nennspannungen der Zugfahrzeugbatterie 20 und des Akkumulators 16 eine Ladung des Akkumulators 16 aus der Zugfahrzeugbatterie 20 erreicht werden. Zum Zwecke der Ladung kann der elektrische Schalter 22 geöffnet werden, so daß eine reine Ladefunktion für den Akkumulator 16 bereitstellbar ist. Dazu weist die Reglereinheit 18 eine programmierbare Kennlinie zum Zwecke der Ladung des Akkumulators 16 auf. Die Energieversorgungsanschlüsse 56, 58, 60 der Reglereinheit 18 sind gegeneinander elektronisch entkoppelt. Ferner ist die Reglereinheit 18 mit einem Überlastschutz versehen, so daß diese gegen Kurzschlüsse, Verpolungen und Übertemperatur geschützt ist.

Im vorliegenden Fall wird der Akkumulator 16 für ca. sechs Stunden mit einer Spannung von 14,2 V geladen. Nach Ablauf dieser Zeit wird die Ladespannung auf 13,8 V abgesenkt, wodurch eine Erhaltungsladung ermöglicht wird. Sollte aufgrund ggf. zugeschalteter Verbraucher 10, 30 die Spannung am Akkumulator 16 unter 12,5 V absinken, so wird ein nicht näher dargestellter Timer zurückgesetzt und der Ladevorgang von neuem gestartet. Ist die aktive Energieversorgungsquelle nicht in der Lage, den maximalen Ladestrom zu liefern, so regelt die Reglereinheit 18 den Ladestrom für den Akkumulator 16 soweit herunter, daß zumindest eine Eingangsspannung von beispielsweise 8 V erhalten bleibt.

Wird das Netzteil 14 über die öffentliche Energieversorgung 12 mit Energie versorgt, so werden über das Umschaltrelais 24 die Verbraucher 10, 30, 28 mit Energie versorgt, indem dieses umgeschaltet wird. Die Verbindung zum Akkumulator 16 über die Leitung 48 wird unterbrochen. Ferner erfolgt nunmehr eine Energieversorgung der Reglereinheit 18 über die Leitung 38 und den Anschluß 58 der Reglereinheit 18. Diese stellt eine Ladung des Akkumulators 16 gemäß vorgebbarer Ladekennlinie sicher. Bei hinreichender Energieversorgung durch das Solarpanel 32 wird die Ladeenergie bevorzugt aus dem Solarpanel 32 entnommen, da dies ohne weitere Kosten möglich ist.

Die erfinderische Ausgestaltung ermöglicht somit, mit geringem Verkabelungsaufwand eine autarke Energieversorgung des Caravans von externen Energiequellen bereitzustellen. Insbesondere ist die Ausgestaltung gemäß der vorliegenden Erfindung geeignet, in einem Caravan, der über eine elektrische Ausrüstung gemäß Fig. 1 verfügt, mit geringem Aufwand nachgerüstet zu werden. Der Verkabelungsaufwand kann gering gehalten werden. Darüber hinaus ist die Verschaltung und Verlegung von Netzspannungsleitungen nicht erforderlich, für die höhere Anforderungen hinsichtlich der elektrischen Sicherheit gelten.

Ferner besteht die Möglichkeit, die vorliegende Erfindung auch mit einem konventionellen Transformatornetzteil zu betreiben, wobei der Akkumulator 16 eine Funktion als Phonosieb ausführen kann. In dieser Ausgestaltung wäre jedoch sicherzustellen, daß Verbraucher, die für eine Energieversorgung mit ungeglätteter Gleichspannung nicht geeignet sind, ausschließlich über den Akkumulator 16 mit Energie versorgt werden.

Die Reglereinheit 18 weist ferner eine Anzeigeeinheit 26 auf, über die die aktuellen Werte der Ladespannung und des Ladestroms anzeigbar sind. Vorzugsweise ist das Anzeigepanel als Siebensegmentanzeige ausgebildet. Über eine Tastatur 64 können die angezeigten Werte ausgewählt werden. Darüber hinaus besteht die Möglichkeit, die Reglereinheit 18 über die Tastatur 64 zu programmieren, indem beispielsweise Schwellwerte oder Ladezeiten vorgegeben werden.

Die in der Figur 3 dargestellten Ausführungsbeispiele dienen lediglich der Erläuterung der Erfindung und sind für diese nicht beschränkend. Die öffentliche Energieversorgung kann auch durch eine andere externe Energieversorgung, wie z. B. einen Generator, gebildet sein. So kann beispielsweise die vorliegende Erfindung auch auf Schiffen bzw. Lastkähnen zum Einsatz kommen, die jeweils eine separate Energieversorgung für Motor und eine Kajüte aufweisen, so beispielsweise auf Kajütsegelbooten. So kann beispielsweise eine Verbindung mit der öffentlichen Energieversorgung im Hafen bereitgestellt werden, wobei eine Ladung des Akkumulators 16 über das Netzteil 14 und die Reglereinheit 18 gewährleistet ist. Für den Betrieb auf See werden die Verbraucher der Kajüte aus dem dafür vorgesehenen Akkumulator versorgt. Bei Ankerung in einer Bucht besteht die Möglichkeit, den Akkumulator für den Motor zur Energieversorgung der Kajüte mit heranzuziehen. Insgesamt erweist es sich als vorteilhaft, daß die Akkumulatoren nicht die gleiche Spannung aufweisen müssen.

### Bezugszeichenliste

- 10: Verbraucher
- 12: Öffentliche Energieversorgung
- 14: Netzteil
- 16: Akkumulator
- 18: Reglereinheit
- 20: Zugfahrzeugbatterie
- 22: Elektrischer Schalter
- 24: Umschaltrelais
- 26: Anzeigeeinheit
- 28: Vorzeltleuchte
- 30: Kühlschrank
- 32: Solarpanel
- 34: Leitung
- 36: Leitung
- 38: Leitung
- 40: Kontakt
- 42: Kontakt
- 44: Kontakt
- 46: Leitung
- 48: Leitung
- 50: Spannungsbooster
- 52: Regler
- 54: Einschaltrelais
- 56: Anschluß
- 58: Anschluß
- 60: Anschluß
- 62: Leitung
- 64: Tastatur

## Patentansprüche

1. System zur Energieversorgung eines elektrischen Verbrauchers (10) eines Fahrzeugs, insbesondere eines Caravans, mit einem mit einer externen Energieversorgung (12) verbindbaren Netzteil (14) und mit einem mittels einer Reglereinheit (18) ladbaren Energiespeicher (16), wobei der Verbraucher (10) aus dem elektrischen Energiespeicher (16) oder über das Netzteil (14) mit Energie versorgbar ist,
**dadurch gekennzeichnet,**
**daß** die Reglereinheit (18) zum Bezug von Energie zur Ladung des Energiespeichers (16) mit dem Netzteil (14) verbindbar ist.

2. System nach Anspruch 1, **dadurch gekennzeichnet, daß** die Reglereinheit (18) zusätzlich von einer weiteren Energiequelle (20) mit Energie versorgbar ist.

3. System nach einem der Ansprüche 1 bis 2, **dadurch gekennzeichnet, daß** die Reglereinheit (18) und/oder das Netzteil (14) ein Schaltmittel (22, 24) aufweist.

4. System nach einem der Ansprüche 1 bis 3, **dadurch gekennzeichnet, daß** die Reglereinheit (18) einen Überlast- und/oder Verpolungsschutz aufweist.

5. System nach einem der Ansprüche 1 bis 4, **gekennzeichnet durch** eine Eingabe- (64) und/oder Anzeigeeinheit (26).

6. System nach einem der Ansprüche 1 bis 5, **dadurch gekennzeichnet, daß** die Reglereinheit (18) eine Aufwärts- und/oder Abwärtsregelung aufweist.

7. System nach einem der Ansprüche 1 bis 6, **dadurch gekennzeichnet, daß** ein Ausgangsstrom und/oder eine Ausgangsspannung der Reglereinheit (18) regelbar ist.

8. System nach einem der Ansprüche 1 bis 7, **dadurch gekennzeichnet, daß** bei aktiver Energieversorgung über das Netzteil der Verbraucher (10) vom Energiespeicher (16) elektrisch abschaltbar und direkt vom Netzteil (14) mit Energie versorgbar ist.

9. System nach einem der Ansprüche 1 bis 8, **dadurch gekennzeichnet, daß** der Energiespeicher (16) bei Unterschreiten eines Schwellwertes der von ihm gespeicherten Energie vom Verbraucher (10) elektrisch trennbar ist.

10. Verfahren zur Energieversorgung eines elektrischen Verbrauchers (10) eines Fahrzeugs, insbesondere eines Caravans, wobei der Verbraucher (10) aus einem mittels einer Reglereinheit (18) ladbaren elektrischen Energiespeicher (16) oder über ein in einer externen Energieversorgung (12) verbindbares Netzteil (14) mit Energie versorgt wird, **dadurch gekennzeichnet, daß** die Reglereinheit (18) die Energie zur Ladung des Energiespeichers (16) aus dem Netzteil (14) bezieht.

11. Verfahren nach Anspruch 10, **dadurch gekennzeichnet, daß** die Reglereinheit (18) zusätzlich von mindestens einer weiteren Energiequelle (20) mit Energie versorgt wird.

12. Verfahren nach einem der Ansprüche 10 oder 11, **dadurch gekennzeichnet, daß** die Reglereinheit (18) die Energiequelle (20) automatisch wählt.

13. Verfahren nach einem der Ansprüche 10 bis 12, **dadurch gekennzeichnet, daß** der Energiespeicher (16) während des Ladevorgangs vom Verbraucher (10) abgekoppelt wird.

## Claims

1. A system for power supply of an electric load (10) of a vehicle, in particular a caravan, comprising a power supply unit (14) that can be connected to an external energy supply (12) and an energy storage (16) that is chargeable by means of a control unit (18), wherein the load (10) can be supplied with energy from the electric energy storage (16) or via the power supply unit (14),
**characterized in that**
the control unit (18) can be connected to the power supply unit (14) for obtaining energy for charging the energy storage (16).

2. A system according to claim 1, **characterized in that** the control unit (18) can be additionally supplied with energy from another energy source (20).

3. A system according to one of the claims 1 through 2, **characterized in that** the control unit (18) and/or the power supply unit (14) comprises a switching means (22, 24).

4. A system according to one of the claims 1 through 3, **characterized in that** the control unit (18) comprises an overload and/or reverse polarity protection.

5. A system according to one of the claims 1 through 4, **characterized by** an input (64) and/or display unit (26).

6. A system according to one of the claims 1 through 5, **characterized in that** the control unit (18) comprises a buck and/or boost regulation.

7. A system according to one of the claims 1 through 6, **characterized in that** an output current and/or output tension of the control unit (18) can be controlled.

8. A system according to one of the claims 1 through 7, **characterized in that** in case of an active energy supply by means of the power supply unit, the load (10) can be electrically separated from the energy storage (16) and directly supplied with energy from the power supply unit (14).

9. A system according to one of the claims 1 through 8, **characterized in that** the energy storage (16) can be electrically separated from the load (10), if the energy stored by it falls short of a threshold value.

10. A method for power supply of an electric load (10) of a vehicle, in particular a caravan, wherein the load (10) is supplied with energy by an electric energy storage (16) that is chargeable by means of a control unit (18) or by a power supply unit (14) that can be connected to an external energy supply (12), **characterized in that** the control unit (18) obtains the energy for charging the energy storage (16) from the power supply unit (14).

11. A method according to claim 10, **characterized in that** the control unit (18) is additionally supplied with energy from at least one other energy source (20).

12. A method according to one of the claims 10 or 11, **characterized in that** the control unit (18) automatically selects the energy source (20).

13. A method according to one of the claims 10 through 12, **characterized in that** the energy storage (16) is uncoupled from the load (10) during the charging operation.

## Revendications

1. Système d'alimentation en énergie d'une charge électrique (10) d'un véhicule, notamment d'une caravane, comprenant un bloc d'alimentation électrique (14) susceptible d'être relié à une alimentation en énergie externe (12) et un accumulateur d'énergie (16) chargeable par moyen d'une unité de réglage (18), la charge (10) étant susceptible de s'alimenter en énergie à partir de l'accumulateur d'énergie électrique (16) ou à partir du bloc d'alimentation électrique (14),
**caractérisé en ce q u'**
on peut relier l'unité de réglage (18) au bloc d'alimentation électrique (14) pour s'alimenter en énergie pour charger l'accumulateur d'énergie (16).

2. Système selon la revendication 1, **caractérisé en ce que** l'unité de réglage (18) peut supplémentairement s'alimenter en énergie d'une autre source d'énergie (20).

3. Système selon l'une des revendications 1 à 2, **caractérisé en ce que** l'unité de réglage (18) et/ou le bloc d'alimentation électrique (14) comprend un moyen de commutation (22, 24).

4. Système selon l'une des revendications 1 à 3, **caractérisé en ce que** l'unité de réglage (18) comprend une protection contre la surcharge et/ou contre l'inversion de polarité.

5. Système selon l'une des revendications 1 à 4, **caractérisé par** une unité d'entrée (64) et/ou d'affichage (26).

6. Système selon l'une des revendications 1 à 5, **caractérisé en ce que** l'unité de réglage (18) comprend un réglage vers le haut et/ou vers le bas.

7. Système selon l'une des revendications 1 à 6, **caractérisé en ce qu'**on peut régler un courant de sortie et/ou une tension de sortie de l'unité de réglage (18).

8. Système selon l'une des revendications 1 à 7, **caractérisé en ce qu'**au cas d'une alimentation active en énergie par moyen du bloc d'alimentation électrique, on peut électriquement débrancher la charge (10) de l'accumulateur d'énergie (16) et directement l'alimenter en énergie du bloc d'alimentation électrique (14).

9. Système selon l'une des revendications 1 à 8, **caractérisé en ce qu'**on peut séparer électriquement l'accumulateur d'énergie (16) de la charge (10), si l'énergie accumulé dans celui-ci sous-dépasse une valeur de seuil.

10. Procédé d'alimentation en énergie d'une charge électrique (10) d'un véhicule, notamment d'une caravane, dans lequel la charge (10) est alimentée en énergie par un accumulateur d'énergie électrique chargeable par moyen d'une unité de réglage (18) ou par un bloc d'alimentation électrique (14) susceptible d'être relié à une alimentation en énergie extérieure (12), **caractérisé en ce que** l'unité de réglage (18) s'alimente en énergie du bloc d'alimentation électrique (14) pour charger l'accumulateur d'énergie (16).

11. Procédé selon la revendication 10, **caractérisé en ce que** l'unité de réglage (18) est supplémentairement alimentée en énergie par au moins une autre source d'énergie (20).

12. Procédé selon l'une des revendications 10 ou 11, **caractérisé en ce que** l'unité de réglage (18) sélectionne automatiquement la source d'énergie (20).

13. Procédé selon l'une des revendications 10 à 12, **caractérisé en ce que** l'accumulateur d'énergie (16) est découplé de la charge (10) pendant l'opération de chargement.
